**Europäisches Patentamt**

**European Patent Office**

**Office européen des brevets**

(11) Numéro de publication : **0 387 148 B1**

(12) **FASCICULE DE BREVET EUROPEEN**

(45) Date de publication du fascicule du brevet :
25.08.93 Bulletin 93/34

(51) Int. Cl.⁵ : **B60J 1/00,** E06B 3/66

(21) Numéro de dépôt : **90400615.2**

(22) Date de dépôt : **07.03.90**

(54) **Vitrage de protection acoustique pour véhicule.**

(30) Priorité : **10.03.89 FR 8903137**

(43) Date de publication de la demande :
**12.09.90 Bulletin 90/37**

(45) Mention de la délivrance du brevet :
**25.08.93 Bulletin 93/34**

(84) Etats contractants désignés :
**BE DE ES FR GB IT LU SE**

(56) Documents cités :
**DE-A- 3 517 581**
**FR-A- 2 480 347**
**FR-A- 2 529 609**

(73) Titulaire : **SAINT GOBAIN VITRAGE INTERNATIONAL**
"Les Miroirs" 18, avenue d'Alsace
**F-92400 Courbevoie (FR)**

(72) Inventeur : **Rehfeld, Marc**
**6, Avenue du Général de Gaulle**
**F-95460 Ezanville (FR)**
Inventeur : **Canaud, Michel**
**119, Avenue Victor Hugo**
**F-75116 Paris (FR)**

(74) Mandataire : **de Toytot, Robert et al**
**SAINT-GOBAIN RECHERCHE 39 quai Lucien Lefranc B.P. 135**
**F-93303 Aubervilliers Cédex (FR)**

EP 0 387 148 B1

Jouve, 18, rue Saint-Denis, 75001 PARIS

## Description

L'invention concerne un vitrage pour véhicule et particulièrement pour véhicule automobile - possédant des performances d'isolation acoustique améliorées et spécialement par rapport aux bruits d'origine aérodynamique.

Parmi toutes les qualités concourant au confort dans les moyens de transport modernes comme les trains et les automobiles, le silence devient déterminant. En effet, les autres sources de désagrément d'origine mécanique, thermique, de visibilité, etc... ont été peu à peu maîtrisées. Mais, l'amélioration du confort acoustique présente de nouvelles difficultés, les bruits eux-mêmes comme les bruits du moteur, bruits de roulement ou de suspension ont déjà été traités à leur origine ou au cours de leur propagation, soit aérienne (revêtements absorbants en particulier) ou dans les solides (pièces de liaison en élastomère par exemple). Les bruits aérodynamiques, c'est-à-dire créés par le frottement de l'air sur le véhicule en déplacement ont pu, au moins en partie, être eux-mêmes traités à leur source, c'est-à-dire que pour économiser l'énergie, les formes ont été modifiées, on a amélioré la pénétration dans l'air et diminué les turbulences qui sont elles-mêmes sources de bruit.

Cependant, aussi bien dans la conception des voitures des trains modernes rapides que dans celle des automobiles, ce qui pouvait être fait pour traiter les sources de bruits aérodynamiques l'a été et ce qui subsiste est irréductible, soit que les bruits soient ceux d'un écoulement laminaire parfait soit que la réduction des turbulences qui subsistent nécessite des mesures disproportionnées et dont le coût serait incompatible avec la rentabilité du projet étudié.

Parmi les parois du véhicule qui séparent la source de bruit aérodynamique extérieure de l'espace intérieur où se trouve le passager, les vitrages sont évidemment les plus difficiles à traiter. On ne peut utiliser les absorbants pâteux ou fibreux réservés aux parois opaques et pour des raisons pratiques ou de poids, les épaisseurs ne peuvent être augmentées inconsidérément. L'invention propose des vitrages qui réalisent une bonne isolation contre les bruits d'origine aérodynamique sans que leur poids et/ou leurs épaisseurs soient trop augmentés.

Les vitrages selon l'invention sont constitués par l'association de deux feuilles de verre monolithique avec une lame d'air, les épaisseurs des deux feuilles de verre différant entre elles de plus de 20 % de telle sorte que leur indice d'affaiblissement acoustique ne se différencie pour aucune des fréquences supérieures à 800 hertz de plus de 5 décibels d'un indice de référence diminuant de 9 dB par octave jusqu'à 2000 Hz et de 3 dB par octave aux fréquence supérieures. De plus, de préférence l'écart-type $\sigma$ des différences de leur indice d'affaiblissement acoustique par rapport à l'indice de référence reste inférieur à 4 dB. Dans un mode de réalisation, il comporte un verre simple de 2,6 mm associé à un verre simple de 3,2 mm et dans un autre, un verre simple de 3,2 mm associé à un verre simple de 3,9 mm.

Selon une variante, le vitrage comporte deux verres monolithiques dont l'épaisseur diffère d'au moins 40 %. C'est ainsi qu'il peut être constitué d'un verre de 2 mm associé à un verre de 3 mm avec une lame d'air d'une épaisseur de 3 mm.

Une autre manière de réaliser un vitrage selon l'invention consiste à utiliser un vitrage feuilleté dont l'intercalaire ait un amortissement à la flexion $\nu = \Delta f/f_c$ supérieur à 0,15, la mesure étant effectuée en excitant par un choc un barreau feuilleté de 9 cm de longueur et 3 cm de largeur fait d'un verre feuilleté où la résine est entre deux verres épais chacun de 4 mm, et en mesurant $f_c$, fréquence de résonance du premier mode et $\Delta f$, largeur du pic à une amplitude $A/\sqrt{2}$ où A est l'amplitude maximum à la fréquence $f_c$ de telle sorte que son indice d'affaiblissement acoustique ne se différencie pour aucune des fréquences supérieures à 800 hertz de plus de 5 décibels d'un indice de référence diminuant de 9dB par octave jusqu'à 2000 Hz et de 3 dB par octave aux fréquences supérieures. De plus, de préférence, l'écart-type $\sigma$ des différences de son indice d'affaiblissement acoustique par rapport à l'indice de référence reste inférieur à 4 dB. Les épaisseurs des deux verres pourront être identiques. Selon une variante, cette épaisseur commune sera de 2,2 mm.

Une manière de réaliser l'amortissement souhaité consiste à utiliser comme intercalaire un composé comportant d'une part une résine thermoplastique résultant de la copolymérisation de 80 à 98,5 % en poids de chlorure de vinyle et de 1 à 10 % de méthacrylate de glucydyle ainsi que de 0,5 à 10 % d'éthylène et, d'autre part de 10 à 40 % en poids d'un plastifiant.

Les figures et la description de l'invention qui suivent permettront de comprendre quel était le problème technique à résoudre et comment on en est arrivé à proposer la solution selon l'invention.

La figure 1 représente le spectre d'un bruit de route standard dans la partie des médiums et des aigus.

Sur la figure 2 on a représenté le spectre d'un bruit mesuré à l'intérieur d'une automobile à vitesse moyenne.

La figure 3 présente, elle, le spectre qu'on souhaite atteindre à l'intérieur d'une voiture à grande vitesse et la figure 4, l'indice d'affaiblissement acoustique selon l'invention qui permet de l'obtenir.

La figure 5 présente une méthode permettant la détermination de l'amortissement à la fréquence critique des résines qui permettent de réaliser des vitrages feuilletés conformes à l'invention.

Les figures 6 et 7 illustrent elles aussi cette méthode.

Les bruits tel qu'ils sont perçus à l'intérieur des véhicules terrestres en mouvement à grande vitesse ont des origines multiples mais chacun selon son origine affecte une zone déterminée du spectre des fréquences acoustiques. D'une manière générale, dans une automobile, par exemple, les bruits d'origine mécanique, moteur, transmission engendrent des sons de fréquences basses et même, des infra-sons, les bruits d'origine aérodynamique, dus aux frottements du véhicule dans l'air affectant les fréquences les plus élevées.

Lorsqu'on veut étudier de tels bruits à leur source, à proximité immédiate et à l'extérieur de la paroi d'un véhicule en mouvement, on doit affronter des difficultés expérimentales extrêmes dues aux frottements des microphones dans l'air, il faut donc utiliser des moyens indirects tels que par exemple la méthode dite de "la double pesée". Elle consiste à faire successivement deux mesures du bruit à l'intérieur du véhicule, la première avec le véhicule arrêté, la source de bruit étant à l'extérieur, parfaitement connue. Cette première mesure permet d'accéder aux caractéristiques de l'affaiblissement acoustique de toute la carrosserie. La deuxième mesure se fait à la vitesse choisie et dans des conditions réelles. Elle permet grâce au calcul inverse de déterminer quel était précisément le spectre du bruit extérieur dont on a constaté l'effet à l'intérieur.

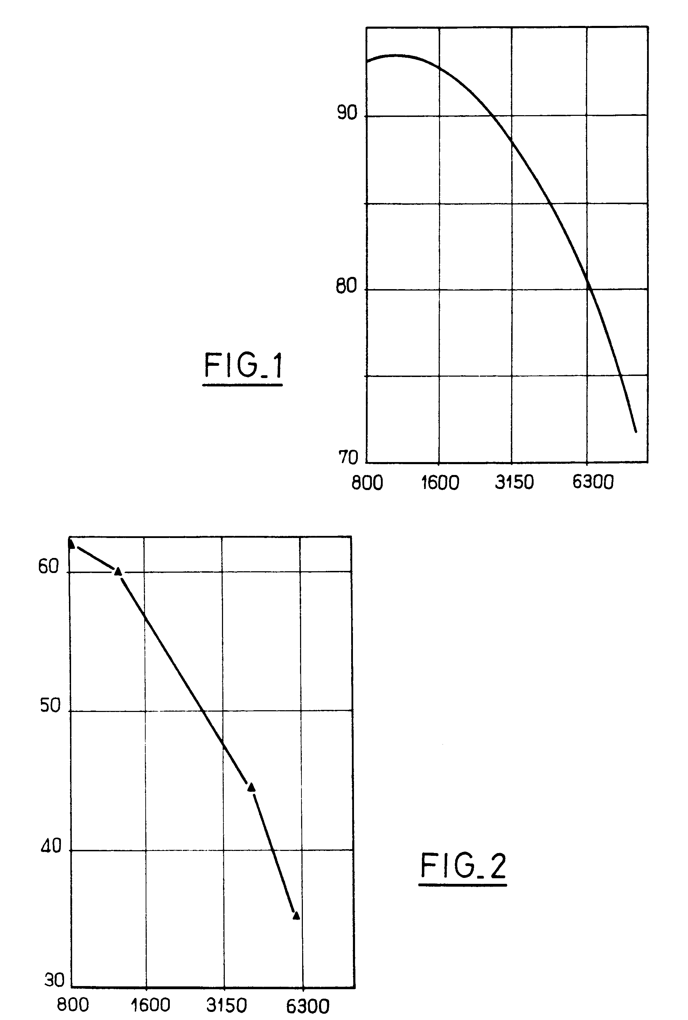

Une telle méthode appliquée à une voiture confortable, c'est-à-dire dans laquelle les bruits autres que ceux d'origine aérodynamique ont été réduits au maximum, montre qu'à une vitesse de l'ordre de 130 Km/h, ce bruit aérodynamique extérieur est assez peu différent dans le domaine des aigus, d'un bruit de route normalisé tel qu'il est proposé habituellement. C'est ainsi en particulier que le bruit de route standard de la norme française NF-S 31051 est très voisin de ce bruit aérodynamique. On a représenté un tel bruit exprimé en dB(A), figure 1 (les très hautes fréquences y sont extrapolées).

Les bruits d'origine aérodynamique étant dus essentiellement à l'écoulement de l'air sur les parois, on peut d'ailleurs s'attendre à ce que le spectre des bruits aérodynamiques d'un wagon de chemin de fer soient peu différents de celui d'un véhicule automobile. Des vérifications ont montré que c'était bien le cas. Il en découle que les développements qui suivent concernent des vitrages destinés aussi bien aux voitures de chemin de fer qu'aux véhicules routiers.

La notion de confort acoustique relève de l'appréciation individuelle de chacun. Les études faites sur le confort dans les véhicules roulant à grande vitesse montrent que le véhicule est considéré comme silencieux lorsque deux conditions sont remplies, d'une part, le niveau sonore moyen est bas, et d'autre part, la courbe représentant le spectre est régulière, sans qu'aucune fréquence émerge de l'ensemble. C'est ainsi que BRYAN, par exemple (A tentative criterion for acceptable noise levels in passenger vehicles - JOURNAL OF SOUND AND VIBRATION 1977 - 48 (4) p. 525) présente un spectre de bruit mesuré dans un véhicule roulant à 100 Km/h et considéré par les usagers comme silencieux. La figure 2 reproduit le spectre en question exprimé en dB(A).

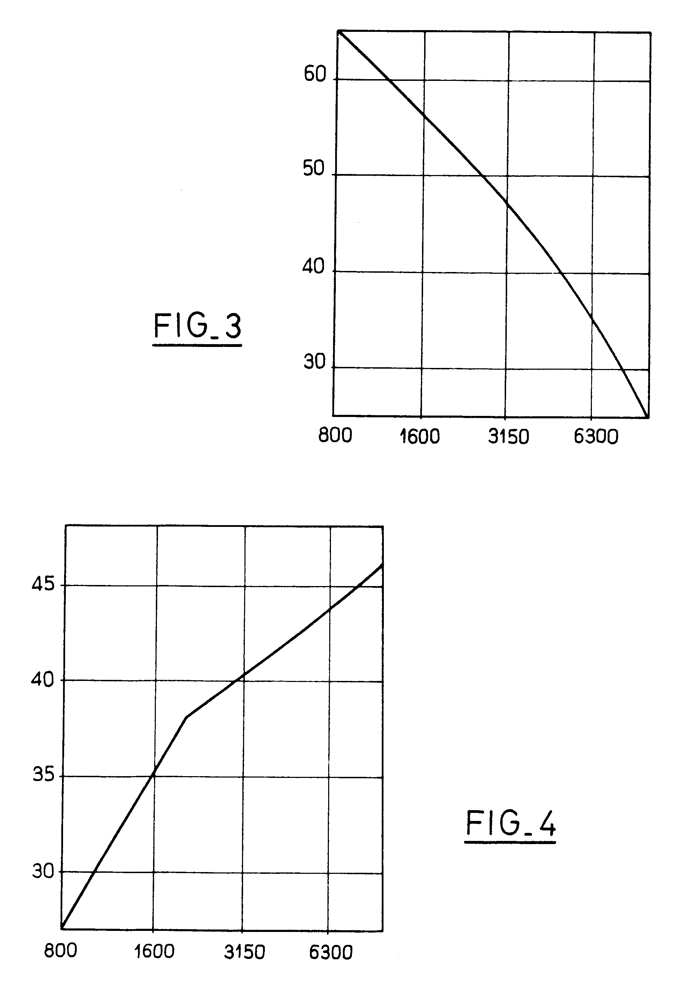

Pour réaliser des conditions de confort acoustique à vitesse élevée, la demanderesse s'est donc fixé un objectif qui tienne compte des observations précédentes. Il est en effet apparu que si l'on réussissait à obtenir à l'intérieur d'un véhicule roulant à grande vitesse, un spectre de bruit de même nature que celui considéré comme donnant une impression de silence dans un véhicule à vitesse moyenne, le confort acoustique serait assuré. La figure 3 présente l'objectif à atteindre exprimé en dB(A). C'est le spectre du bruit qu'on désire obtenir à l'intérieur d'un véhicule roulant à vitesse élevée c'est-à-dire pour lequel le bruit extérieur aurait un spectre comparable à celui de la figure 1.

La demanderesse a trouvé que le vitrage d'un véhicule respectant ces conditions devait avoir un indice d'affaiblissement acoustique dont la courbe représentative s'écarte le moins possible de la courbe reproduite figure 4. Celle-ci se caractérise par une pente de 9 décibels par octave de 800 à 2000 hertz et de 3 décibels par octave de 2000 à 10000 hertz. Le niveau de la courbe (36 dB à 1600 hertz sur la figure 4) est beaucoup moins important pour le confort subjectif des passagers que son allure, c'est-à-dire, ses deux pentes successives et surtout, sa régularité qui garantit l'absence d'émergence de fréquences isolées. Une courbe globalement décalée parallèlement à elle-même vers le bas serait moins satisfaisante mais serait conforme à l'invention et donnerait néanmoins une bonne impression de confort. De même une courbe décalée vers les isolements supérieurs améliorerait le confort sans sortir du cadre de l'invention.

Parmi les vitrages susceptibles de répondre au critère précédent on trouve les verres simples, les vitrages isolants ou les vitrages feuilletés.

TABLEAU I

| Fréquence (Hz) | Indice d'affaiblissement acoustique (dB) | | | | | | | |
|---|---|---|---|---|---|---|---|---|
| | 0 | 1 | 2 | 3 | 4 | 5 | 6 | 7 |
| 800 | 27 | 31 | 33 | 32 | 32 | 32 | 27 | 27 |
| 1000 | 30 | 35 | 36 | 35 | 36 | 36 | 30 | 31 |
| 1250 | 33 | 36 | 37 | 36 | 36 | 36 | 31 | 33 |
| 1600 | 36 | 35 | 38 | 36 | 37 | 37 | 34 | 35,5 |
| 2000 | 39 | 33 | 39 | 36 | 38 | 37,5 | 38 | 38,5 |
| 2500 | 40 | 32 | 39 | 35 | 39 | 38 | 41 | 40,5 |
| 3150 | 41 | 33 | 39 | 35 | 39 | 37,5 | 40 | 39 |
| 4000 | 42 | 35 | 38 | 35 | 40 | 38,5 | 39 | 37,5 |
| 5000 | 43 | 38 | 36 | 38 | 39 | 39 | 42 | 40 |
| 6300 | 44 | 40 | 38 | 41 | 41 | 41 | 43 | 42 |
| 8000 | 45 | 45 | 41 | 44 | 43 | 44 | 43 | 44,5 |
| 10000 | 46 | 47 | 45 | 49 | 47 | 48 | 46 | 47,5 |

Le tableau I présente les indices d'affaiblissement acoustique pour différents types de vitrages. Ce sont dans l'ordre :

n° O :         l'affaiblissement acoustique de l'invention, à 9 dB puis 3 dB par octave,

n° 1 :         plaque de verre (éventuellement trempé) de 5 mm d'épaisseur

n° 2 :         verre feuilleté 2,2 - 1,5 - 2,6 avec résine polyuréthane

n° 3 :         verre feuilleté 2,2 - 0,76 - 2,2 avec PVB à 25°C

n° 4 :         verre feuilleté 2,2 - 0,76 - 2,2 avec PVB à 35°C

n° 5 :         verre feuilleté 2,2 - 1,1 - 2,2 avec résine PVC spéciale

n° 6 :         vitrage isolant 2,0 (3) 3,2

et n° 7 :         vitrage isolant 2,6 (3) 3,2

(les chiffres précédents correspondent aux épaisseurs en millimètres, ces épaisseurs sont données à titre d'exemple, elles pourraient être sensiblement modifiées sans qu'on sorte du cadre de l'invention. Cette remarque s'applique aux vitrages 4, 5, 6 et 7).

Les mesures de ces indices d'affaiblissement acoustique ont été réalisées selon la norme ISO-140 dans une installation conforme à ladite norme sur des échantillons de dimensions 80 x 50 cm.

L'échantillon de verre simple silico-sodo-calcique de 5 mm d'épaisseur avait subi une trempe thermique traditionnelle.

Les échantillons 3 et 4 étaient des vitrages feuilletés à base de polyvinylbutyral (PVB) l'épaisseur du film était de 0,76 mm. Pour faire varier les performances acoustiques, en particulier "l'amortissement à la flexion à la fréquence critique" qui sera défini plus loin, on a modifié la température de l'échantillon au moment de la mesure.

De même, les échantillons 2 et 5 sont des verres feuilletés dont l'intercalaire est de nature différente pour obtenir des propriétés acoustiques différentes. L'intercalaire de l'échantillon n° 2 est un polyuréthane thermoplastique d'une épaisseur de 1,5 mm du type MORTHANE PE 192 fourni par la Société MORTON THIOKOL. Quant à l'échantillon n° 5, son intercalaire est un film à base de polychlorure de vinyle (PVC) modifié tel qu'il est décrit dans le brevet US-A-4 382 996. Il s'agit d'un composé comportant d'une part une résine thermoplastique résultant de la copolymérisation de 80 à 98,5 % en poids de chlorure de vinyle et de 1 à 10 % de méthacrylate de glucydyle ainsi que de 0,5 à 10 % d'éthylène et, d'autre part de 10 à 40 % en poids d'un plastifiant. Son épaisseur est de 1,15 mm.

Les échantillons 6 et 7 quant à eux sont des vitrages isolants traditionnels, seules leur lame d'air est réduite à 3 mm pour des raisons d'encombrement et leurs épaisseurs choisies pour des raisons acoustiques.

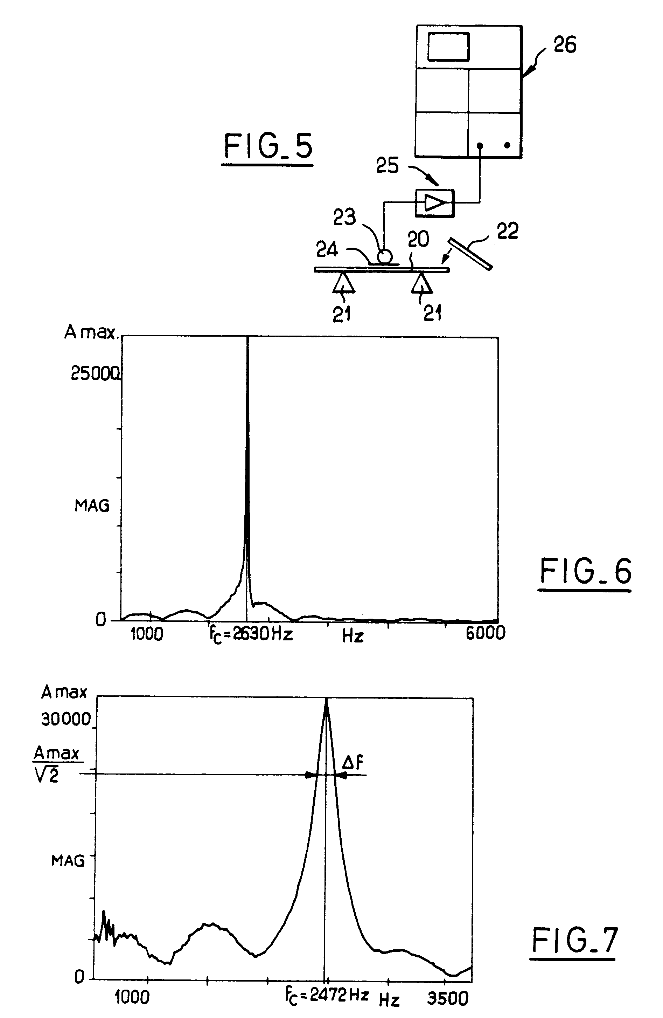

Les résines utilisées comme intercalaires ont été choisies pour leurs amortissements différents. On va maintenant décrire, en référence à la figure 5, la méthode qui permet de faire le choix d'une résine utilisable dans le cadre de l'invention.

On sait que l'énergie acquise par un objet soumis à un choc engendre un phénomène de vibration et qu'aussitôt après le choc, l'objet redevenu libre vibre suivant son mode propre. A chaque mode est associée une fréquence de vibration. L'amplitude de la vibration dépend de l'excitation initiale, c'est-à-dire de la composante spectrale du choc (amplitude du choc à la fréquence étudiée) et de la zone d'impact du choc, la déformation normale étant plus ou moins importante selon que le choc se produit à un ventre ou à un noeud de vibration.

Pour qu'un mode propre soit excité, il faut :

(1) que la déformation provoquée au point d'impact ne se situe pas sur un noeud de vibration du mode,

(2) que le spectre d'énergie de choc ait une composante à la fréquence de résonance du mode.

Cette dernière condition est également remplie et, pour un barreau libre à ses extrémités, par exemple, il suffit de taper à l'une des extrémités pour exciter tous les modes.

En réalité, on n'arrive à mesurer que les dix premiers modes, au maximum. L'énergie vibratoire acquise par un choc se dissipe au cours du temps et ce d'autant plus rapidement que le matériau est plus amorti.

Pour un matériau donné, les modes se dissipent d'autant plus vite que la fréquence de résonance associée est plus élevée, de sorte qu'au bout d'un certain temps, et pendant une certaine durée, seul le premier mode subsiste.

Le principe de la mesure consiste donc à effectuer l'analyse des fréquences de vibration d'un barreau soumis à un choc et à repérer la position des fréquences de résonance (fréquences pour lesquelles l'amplitude de vibration est nettement plus importante que dans le reste du spectre).

Pour effectuer la mesure (figure 5), on utilise successivement des barreaux 20 de 9 cm de longueur et de 3 cm de largeur, d'abord en un verre de 4 mm d'épaisseur, puis en un verre feuilleté 4-X-4, dans lequel des feuilles de verre de 4 millimètres d'épaisseur sont assemblées par une couche de X millimètres d'épaisseur de la résine à tester.

Le barreau 20 repose sur deux supports de mousse 21, placés sensiblement aux noeuds de vibration du premier mode (mode fondamental) de flexion dynamique du barreau. Celui-ci est excité par un choc exercé en frappant l'une de ses extrémités libres par un petit objet 22, tel qu'une règle.

La réponse transitoire du barreau à cette excitation est recueillie par un microphone 23, disposé sur un support 24, très près de la surface du barreau 20, au milieu de celui-ci (ventre de pression). Le signal temporel recueilli par le microphone 23 est amplifié par l'amplificateur 25, puis analysé en fréquence par un analyseur Fourier 26.

On procède en général à une dizaine d'essais pour un même barreau 20, afin de réduire l'influence des bruits extérieurs.

Comme on le voit sur les figures 6 et 7, les courbes obtenues, qui représentent l'amplitude A des vibrations en fonction de la fréquence de celles-ci, respectivement pour un barreau de verre monolithique et pour un barreau de verre feuilleté comprenant une résine à tester dans le cadre de la présente invention, permettent de déceler avec précision la fréquence de résonance du mode fondamental de vibration de flexion (fréquence critique). Dans les exemples représentés, la fréquence critique du barreau de verre feuilleté est de 2472 Hz.

Le test qui vient d'être décrit et qui est d'une grande simplicité de mise en oeuvre permet de déterminer l'amortissement à la flexion $\nu$ du barreau 20, que l'on définit comme le rapport $\Delta f / f_c$ où $\Delta f$ représente la différence des fréquences correspondant à une amplitude égale à celle de la fréquence critique $f_c$, divisée par $\sqrt{2}$.

Les résultats des mesures d'indice d'affaiblissement acoustique figurant sur le tableau I permettent de calculer pour chaque fréquence la différence positive ou négative entre l'indice de référence (colonne O) et l'indice d'un produit donné (n° 1 à 7).

Pour chaque vitrage on calcule ensuite la différence des valeurs extrêmes de ces différences calculées à chaque fréquence.

Ainsi par exemple pour le vitrage n° 1, la plus grande valeur positive se présente pour 1000 Hz, elle est de + 5. La plus petite valeur négative, à 2500 comme à 3150 Hz est de - 8, la différence des extrêmes sera donc 5-(-8) = 13 et l'écart correspondant par rapport à l'indice de référence est donc ici de 6,5 dB. Il est possible en effet de décaler la courbe de référence pour que les écarts positifs et négatifs aient la même valeur absolue, ici 6,5 dB. On voit ainsi que lorsqu'on parle d'une "différence des extrêmes" qui a la valeur E pour un vitrage donné, celà signifie que l'indice d'affaiblissement acoustique du vitrage en question ne se différencie pour aucune fréquence de plus de E/2 décibels de l'indice de référence.

Pour chaque vitrage, on a également calculé la moyenne des différences en question.

Par ailleurs, dans chaque cas, on a calculé l'écart-type σ, de toutes ces différences. Cette valeur est très intéressante car elle rend compte de l'émergence de certaines fréquences dans le spectre de bruit tel qu'il est perçu dans le véhicule en mouvement. Lorsque le spectre est régulier, l'écart-type reste faible, au contraire si ce spectre est très perturbé, σ augmente.

|   | Différence des Extrêmes E(dB) | Moyenne des différences (dB) | Ecart-type des différences σ(dB) | Amortissement (%) |
|---|---|---|---|---|
| 1 | 13 | -2,2 | 4,6 | - |
| 2 | 13 | -0,6 | 4,2 | 12 |
| 3 | 13 | -1,2 | 4,2 | 16 |
| 4 | 10 | -0,1 | 3,0 | 19 |
| 5 | 10 | -0,1 | 3,3 | 20 |
| 6 | 4 | -1,0 | 1,1 | - |
| 7 | 5,5 | -0,6 | 1,7 | - |

Le tableau présente les résultats pour les sept exemples considérés. On a également fait figurer les amortissements mesurés sur les résines mises en oeuvre dans les feuilletés 2, 3, 4 ou 5.

Ces résultats montrent d'une part, le très bon comportement des vitrages isolants, ils s'écartent peu de la courbe-cible (moyenne des différences - 1,0 et - 0,6 dB respectivement) mais surtout, l'écart-type de leurs différences est remarquablement faible (respectivement 1,1 et 1,7 dB). Les deux exemples cités (vitrages 6 et 7) ne sont pas limitatifs, on a noté également le bon comportement d'autres combinaisons comme par exemple 3,2 et 3,9 mm.

Le vitrage monolithique de 5 mm se montre médiocre.

Avec les vitrages feuilletés on note surtout l'influence déterminante de l'amortissement sur l'écart-type des différences, c'est-à-dire, en réalité sur la dispersion de ces différences, donc sur l'émergence de fréquences gênantes dans le spectre de bruit résultant. La résine de polyuréthane thermoplastique, vitrage n° 2, avec un amortissement ν de 12 % fournit des différences des extrêmes E et un écart-type σ élevés (respectivement 13 dB et 4,2 dB). En revanche, avec une même résine, le polyvinylbutyral, en variant seulement la température, qui passe de 25°C (vitrage n° 3) à 35°C (vitrage n° 4) on constate une amélioration de 28 % du σ. Cette amélioration est due uniquement à la variation de l'amortissement à la fréquence de coïncidence qui passe de 16 à 19 % lorsque la température du PVB s'élève.

Dans la pratique, cependant, il est nécessaire de disposer d'un produit qui garde ses propriétés dans une gamme de températures importante.

Le PVC modifié du feuilleté n° 5 montre des propriétés d'amortissement élevées (20 %) dans une gamme de température très large, il donne donc une réponse très satisfaisante au problème de la protection acoustique d'un véhicule contre les bruits aérodynamiques.

Par ailleurs, l'utilisation généralisée de vitrages feuilletés sur un véhicule présente des avantages supplémentaires évidents : sur les voitures de chemin de fer, il supprime le risque de projection de fragments en cas de casse brutale comme ce serait le cas avec un verre trempé et, sur une automobile, il est retardateur d'effraction, c'est-à-dire que quelqu'un qui voudrait pénétrer par effraction dans un véhicule en stationnement pour effectuer un vol aurait besoin d'un temps nettement plus long dans le cas où tous les vitrages sont feuilletés.

On voit ainsi que l'invention propose une solution générale au problème de l'isolement acoustique aux bruits aérodynamiques d'un véhicule terrestre à grande vitesse. Cette solution se concrétisant dans deux types de vitrages adaptés, l'un qui appartient à la famille des vitrages à isolation thermique améliorée : vitrage isolant à lame d'air, l'autre à celle des vitrages retardateurs d'effraction : vitrage feuilleté à intercalaire plastique.

**Revendications**

1. Vitrage de protection acoustique d'un véhicule contre les bruits aérodynamiques, **caractérisé en ce qu'**il est constitué par l'association de deux feuilles de verre monolithique avec une lame d'air, les épaisseurs des deux feuilles de verre différant entre elles de plus de 20 % **de telle sorte que** son indice d'affaiblissment acoustique ne se différencie pour aucune des fréquences supérieures à 800 hertz de plus de 5 décibels d'un indice de référence diminuant de 9 dB par octave jusqu'à 2000 Hz et de 3 dB par octave aux fréquences supérieures.

2. Vitrage selon la revendication 1, **caractérisé en ce que** l'écart-type $\sigma$ des différences de son indice d'affaiblissement acoustique par rapport à l'indice de référence reste inférieur à 4 dB.

3. Vitrage selon la revendication 1 ou 2, **caractérisé en ce qu'**il comporte un verre simple de 2,6 mm associé à un verre simple de 3,2 mm.

4. Vitrage selon la revendication 1 ou 2, **caractérisé en ce qu'**il comporte un verre simple de 3,2 mm associé à un verre simple de 3,9 mm.

5. Vitrage selon la revendication 1 ou 2, **caractérisé en ce qu'**il comporte deux verres monolithiques dont l'épaisseur diffère d'au moins 40 %.

6. Vitrage selon la revendication 5, **caractérisé en ce qu'**il est constitué d'un verre de 2 mm associé à un verre de 3 mm.

7. Vitrage selon l'une des revendications précédentes, **caractérisé en ce que** la lame d'air a une épaisseur de 3 mm.

8. Vitrage de protection acoustique d'un véhicule contre les bruits aérodynamique, **caractérisé en ce qu'**il est constitué d'un vitrage feuilleté dont le plastique intercalaire possède un amortissement à la flexion $\nu$ = $\Delta f/f_c$ supérieur à 0,15, la mesure étant effectué en excitant par un choc un barreau feuilleté de 9 cm de longueur et 3 cm de largeur fait d'un verre feuilleté où la résine est entre deux verres épais chacun de 4 mm, et en mesurant $f_c$, fréquence de résonnance du premier mode et $\Delta f$, largeur du pic à une amplitude $A/\sqrt{2}$ où A est l'amplitude maximum à la fréquence $f_c$ **de telle sorte que** son indice d'affaiblissement acoustique ne se différencie pour aucune des fréquences supérieures à 800 hertz de plus de 5 décibels d'un indice de référence diminuant de 9 dB par octave jusqu'à 2000 Hz et de 3 dB par octave aux fréquences supérieures.

9. Vitrage selon la revendication 8, **caractérisé en ce que** l'écart-type $\sigma$ des différences de son indice d'affaiblissement acoustique par rapport à l'indice de référence reste inférieur à 4 dB.

10. Vitrage selon la revendication 8 ou la revendication 9, **caractérisé en ce qu'**il comporte deux verres d'épaisseur identique et égale à 2,2 mm.

11. Vitrage selon la revendication 8 ou la revendication 9, **caractérisé en ce que** le plastique intercalaire est à base d'un composé comportant d'une part une résine thermoplastique résultant de la copolymérisation de 80 à 98,5 % en poids de chlorure de vinyle et de 1 à 10 % de méthacrylate de glucydyle ainsi que de 0,5 à 10 % d'éthylène et, d'autre part de 10 à 40 % en poids d'un plastifiant.

**Patentansprüche**

1. Verglasung zum akustischen Schutz für ein Fahrzeug gegen den aerodynamischen Lärm, **dadurch gekennzeichnet,** daß sie eine Verbindung aus zwei monolithischen Glasscheiben mit einem Luftzwischenraum umfaßt, wobei die Dicken der beiden Glasscheiben um mehr als 20 % voneinander abweichen, sodaß ihr Schalldämmaß für Frequenz oberhalb von 800 Hertz nicht um mehr als 5 dB von einem Bezugsindex differiert, der 9 dB pro Oktave bis 2000 Hz und 3 dB pro Oktave bei höheren Frequenzen ab-

EP 0 387 148 B1

nimmt.

2. Verglasung nach Anspruch 1, **dadurch gekennzeichnet,** daß die Standardabweichung $\sigma$ der Differenzen ihres Schalldämmaßes zum Bezugsindex unterhalb von 4 dB liegt.

3. Verglasung nach Anspruch 1 oder 2, **dadurch gekennzeichnet,** daß sie ein einfaches Glas von 2,6 mm verbunden mit einem einfachen Glas von 3,2 mm umfaßt.

4. Verglasung nach Anspruch 1 oder 2, **dadurch gekennzeichnet,** daß sie ein einfaches Glas von 3,2 mm verbunden mit einem einfachen Glas von 3,9 mm umfaßt.

5. Verglasung nach Anspruch 1 oder 2, **dadurch gekennzeichnet,** daß sie zwei monolithische Gläser umfaßt, deren Dicke sich um mindestens 40 % unterscheidet.

6. Verglasung nach Anspruch 5, **dadurch gekennzeichnet,** daß sie ein Glas von 2 mm verbunden mit einem Glas von 3 mm umfaßt.

7. Verglasung nach einem der vorangegangenen Ansprüche, **dadurch gekennzeichnet,** daß der Luftzwischenraum eine Dicke von 3 mm aufweist.

8. Verglasung zum akustischen Schutz für ein Fahrzeug gegen den aerodynamischen Lärm, **dadurch gekennzeichnet,** daß sie eine Verbundverglasung umfaßt, bei der der dazwischenliegende Kunststoff eine Biegedämpfung $\nu = \Delta f/f_c$ größer als 0,15 aufweist, wobei die Messung durch Schockanregung eines Verbundstabes von 9 cm Länge und 3 cm Breite aus Verbundglas durchgeführt wurde, wo das Harz sich zwischen zwei Gläsern befindet, die jeweils 4 mm dick sind und durch Messung von $f_c$, der Resonanzfrequenz der ersten Mode und $\Delta f$, der Breite der Spitze bei einer Amplitude $A/\sqrt{2}$, wobei A die Maximumsamplitude bei der Frequenz $f_0$ ist, in der Weise, daß ihr Schalldämmaß für Frequenz über 800 Hz sich nicht um mehr als 5 dB von einem Bezugsindex unterscheidet, der 9 dB pro Oktave bis 800 Hz und 3 dB pro Oktave bei höheren Frequenzen abnimmt.

9. Verglasung nach Anspruch 8, **dadurch gekennzeichnet,** daß die Standardabweichung $\sigma$ der Differenzen des Schallämmaßes gegenüber dem Bezugsindex unterhalb von 4 dB liegt.

10. Verglasung nach Anspruch 8 oder 9, **dadurch gekennzeichnet,** daß sie zwei Gläser von identischer Dicke gleich 2,2 mm umfaßt.

11. Verglasung nach Anspruch 8 oder 9, **dadurch gekennzeichnet,** daß der dazwischenliegende Kunststoff auf der Basis einer Zusammensetzung beruht, die einenteils ein thermoplastisches Harz enthält, das aus der Kopolymerisation von 80 bis 98,5 Gew.-% von Vinylchlorid und 1 bis 10 % Glucydyle-Methacrylat ebenso wie 0,5 bis 10 % Ethylen gewonnen wurde, und anderenteils 10 bis 40 Gew.-% eines Weichmachers enthält.


## Claims

1. Acoustic protection pane for a vehicle against aerodynamic noise, characterized in that it is constituted by the association of two monolithic glass sheets with a layer of air, the thicknesses of the two glass sheets differing from each other by more than 20%, such that its acoustic attenuation index does not differ, for any of the frequencies above 800 hertz, by more than 5 decibels from a reference index decreasing by 9 dB per octave up to 2 000 Hz and by 3 dB per octave at the higher frequencies.

2. Pane according to Claim 1, characterized in that the standard deviation $\sigma$ of the differences in its acoustic attenuation index relative to the reference index remains below 4 dB.

3. Pane according to Claim 1 or 2, characterized in that it comprises a single glass sheet of 2,6 mm associated with a single glass sheet of 3,2 mm.

4. Pane according to Claim 1 or 2, characterized in that it comprises a single glass sheet of 3,2 mm associated with a single glass sheet of 3,9 mm.

8

5. Pane according to Claim 1 or 2, characterized in that it comprises two monolithic glass sheets, the thickness of which differs by at least 40%.

6. Pane according to Claim 5, characterized in that it is constituted of a glass of 2 mm thickness associated with a glass of 3 mm thickness.

7. Pane according to one of the preceding Claims, characterized in that the layer of air has a thickness of 3 mm.

8. Acoustic protection pane for a vehicle against aerodynamic noise, characterized in that it is constituted of a laminated pane, the plastics intermediate sheet of which possesses a flexural damping $\nu = \Delta f/f_c$ greater than 0,15, the measurement being obtained by exciting, by means of a shock, a laminated bar of 9 cm length and 3 cm width, made of a laminated glass in which the resin is between two glass sheets each 4 mm thick, and by measuring $f_c$, the resonance frequency of the first mode, and $\Delta f$, the width of the peak at an amplitude $A/\sqrt{2}$, where A is the maximum amplitude at frequency $f_c$, such that its acoustic attenuation index does not differ for any of the frequencies greater than 800 hertz by more than 5 decibels from a reference index decreasing by 9 dB per octave up to 2 000 Hz and by 3 dB per octave at the higher frequencies.

9. Pane according to Claim 8, characterized in that the standard deviation $\sigma$ of the differences in its acoustic attenuation index relative to the reference index remains below 4 dB.

10. Pane according to Claim 8 or Claim 9, characterized in that it comprises two glass sheets of identical thickness, 2,2 mm.

11. Pane according to Claim 8 or Claim 9, characterized in that the plastics intermediate layer is based upon a compound comprising, on the one hand, a thermoplastics resin resulting from the copolymerization of 80 to 98,5% by weight vinyl chloride and 1 to 10% glucydyl methacrylate and also from 0,5 to 10% ethylene and, on the other hand, 10 to 40% by weight of a plasticizer.

FIG_1

FIG_2

FIG_3

FIG_4

FIG.5

FIG.6

A max.

25000

MAG

0

1000    $f_C = 2630\,Hz$    Hz    6000

FIG.7

A max

30000

$\dfrac{A\,max}{\sqrt{2}}$    $\Delta f$

MAG

0

1000    $f_C = 2472\,Hz$    Hz    3500

12